# EUROPEAN PATENT APPLICATION

(11) **EP 2 199 261 A1**
(43) Date of publication of application: **23.06.2010**
(21) Application number: 08291159.5
(22) Date of filing: 09.12.2008
(51) Int. Cl.: C02F 1/44, C02F 3/28

(54) **A novel waste water purification method and a process for use therefor**

(71) Applicant: Université de Caen Basse Normandie, 14032 Caen Cedex (FR)
(72) Inventor: Bohm, Jean-Luc, 14032 Caen Cedex (FR); Hennequin, Didier, 14032 Caen Cedex (FR)
(74) Representative: Burtin, Jean-François

(57) **Abstract**

This invention relates to the needs of life and namely to the purification and treatment of waste waters.
This invention specifically relates to a method for treating effluents having a high concentration of organic substances which comprises using an anaerobic biological reactor with fixed cells and a filtration device, which combines the introduction of effluents from the top of the biological reactor operating in a down flow configuration and an outer cross flow filtration device provided with low cut-off membrane filters.
This device is used for treating effluents derived from the foodagricultural industry and namely in the dairy industry.

## Description

The invention relates to daily life needs and more particularly to methods for waste water purification and decontamination. More specifically, it is directed to a device for biologically treating organic effluents present in high concentration in residual waters.

Decreasing the flow of pollutants has become a vital issue in coping with the sanitary legislation. Biological reactor procedures including a membrane filter separation technique are a recent development, which provide a satisfactory solution in response to new sanitary requirements and allow recycling of waters sufficiently exempt from biological, chiefly organic products, which might have an impact on consumers' health and the environment.

Current processes are known under trade name MBR : Membrane Filter Bioreator (registered trademark) as well as ABP : Assisted Biological Purification (registered trademark). The principle behind these methods consists in degrading under aerobic conditions organic pollution matter whereby a biomass is produced. This biomass is concentrated by means of a membrane filter separation technique, whether of a microfiltration or ultrafiltration type, thus maintaining a high concentration of biomass inside the reactor. See most notably published papers "Membrane Bioreactor for wastewater treatment : the state of the art and new developments, L. Van Dijk and G.C.G Roncken, Wat. Sci. Tech., vol. 35 : N° 10, pp. 35 - 41, 1997" and "The application of membrane biological reactors for the treatment of wastewater, K Brindle and T. Stephenson, (Biotechnology and Bioengineering, vol. 49 : pp. 601 - 610, 1996)".

Anaerobic reactors are characterized by the residence time of liquid and solid matter. Two major classes of methods can be distinguished : Biological reactors where liquid and solid matter residence time values are identical (infinitely mixed systems), and those where the residence time values are uncoupled. Uncoupling retention time values can either be done outside the reactor through physical separation (anaerobic contact systems) or inside the reactor through biomass fixation (fixed cell reactors, fluidized bed reactors, "upflow anaerobic sludge blanket" reactors). Uncoupling hydraulic and solids residence time values provides for a better performance as far as depollution is concerned by optimizing volume management.

Continuously stirred or infinitely mixed systems are relatively simple methods used in water treatment, basically for sludge stabilization and in very rare instances for treating raw effluents.

Anaerobic contact methods include an infinitely mixed reactor in association with a downstream decant basin, which enables maintaining a higher biomass concentration inside the biological reactor through sludge recycling. Effectiveness of such a method substantially depends on the decanting capacity of anaerobic sludge. These methods are an improvement over infinitely mixed reactors taken alone, but have the drawback of still being quite cumbersome.

Anaerobic reactors such as of the "anaerobic membrane filter reactor system" type are comprised of an infinitely mixed reactor in association with a membrane filter separation device. Membrane filter separation is more effective than decanting taken solely, but the biomass concentration inside the reactor is still limited owing to the fact that cells are kept in suspension.

Even though these methods produce a lesser quantity of biomass than typical activated sludge methods, such methods lead nevertheless to a limited production of biomass which needs to be removed at regular intervals, a feature which is not trouble-free since disposal of biomass in sewage farms favours carry-over or diffusion of contaminants into the ground and possibly into runoff waters.

An improved method for purifying effluents by anaerobic fermentation, being the subject matter of French Patent # 2806400, has already been known, which method consists in operating an anaerobic biological reactor and a separation device, which is **characterized in that** the anaerobic reactor is of an upflow fixed cell type, in that said separation device is comprised of a membrane filtration unit, in that said reactor is arranged on top of a grid delimiting the upperside of a distribution zone within the effluent flowing at the base of the reactor, in that the effluent leaving the reactor is directed toward the feed tank of the membrane filtration unit and in that said membrane filtration unit includes a volumetric pumping flow system and a pressure regulator device.

The anaerobic reactor is provided with a heat regulator system so that the temperature can be maintained at about 35°C (mesophilic conditions) or 55°C (thermophilic conditions).

Hence, the improved method in accordance with the invention involves coupling an anaerobic biological reactor to an outer cross-flow filtration device equipped with low cut-off membrane filters in order to maintain a high concentration of microorganisms in the reactor and especially to retain a fraction as big as possible of soluble pollutants.

Purification rates ranging from 95 to 99% characterized by an extremely low COD (Chemical oxygen demand) and by a very reduced BOD (Biological oxygen demand) are thus obtained.

The invention is also **characterized in that** the biological reactor and the cross-flow filtration unit are interconnected by a coupling device whereby hydraulics of both systems are made totally independent in the sense that the flow rates in the biological unit reactor and the filtration unit are different and in each case subject to intrinsic limitations.

This process is characterized by the provision of a fixed bed biological reactor, containing an organized or bulk packing material made up from an inert stuff such as polyethylene (PE) or high density polyethylene (HDPE). Pursuant to the invention, this packing material is defined as having a well specified void space percentage and a high specific area.

The process in accordance with the invention is equally **characterized in that** the packing material applied on a support such as a wire-mesh or a grating is located in the lower portion of the reactor.

Another very important feature of the present process resides in that feeding of the biological reactor is accomplished from the top of the tank by means of an electric flow pump P1. As a result, a downflow movement inside the tank is obtained along with an even distribution of the effluent at the top portion of the tank by means of a dispersion device.

In accordance with the invention, the biological reactor tank where fermentation occurs is heat insulated in order to maintain the content thereof at an easily adjustable constant temperature.

This constant temperature ranges from 30 to 40°C and preferably from 33 to 36°C for mesophilic anaerobic digestion and from 50 to 60°C, with 50°C being preferable for thermophilic anaerobic digestion.

The skilled artisan in the field will determine whether mesophilic or thermophilic digestion is appropriate based on those properties of the effluent to be treated.

In accordance with another feature of the invention, shaking of the biological medium and an even distribution of temperature inside the reactor are achieved by an outer liquid recycle loop. Heating of the reactor, whether conducted at 30, 40, 50 or 60°C is carried out by a heat exchange device located along the recycle loop of the digestion device.

The cross-flow filtration unit is comprised of one or several organic or mineral membranes. Organic membranes are of the polysulfone type whereas mineral membranes are ceramic ones.

The choice of a given membrane type and most notably the determination of cut-off rates are based on the effluent characteristics, as determined either beforehand or in the course of treatment, as well as on the target discharge performances to be achieved.

Finally, the important features of the present invention reside in the provision of a coupling device between the biological reactor and the cross-flow filtration unit, which consists of a water flow system, the arrangement of a coupling basin allowing hydraulics of the biological reactor and the ultrafiltration unit to be uncoupled.

Moreover, independently driven effluent flow rates in the biological reactor are achieved. These rates are determined by two distinct pumps (Pumps P 2 and P3).

The device also includes a monitoring device which allows continuous recording of the different parameters of the fermentation reaction and the purification process. It also allows :-
- the remote management of the process
- temperature adjustment (flow loop, tank)
- flow rate adjustment (feeding, recycling)
- controlling the composition of the biogas being produced in terms of methane and carbon dioxide concentrations
- pH regulation in the recycle loop

The invention further comprises an anaerobic biological purification device which includes a waste water feeding device, a device for introducing said waste water into the upper portion of a biological reactor operated under anaerobic conditions, having in its lower portion a fixed bed, containing an inert bulk packing material positioned on a support and provided with a dispersion device arranged on top of the tank with a sludge draining device, located in the lower portion of the biological reactor, and with a device for discharging purified waters which sends the same to a central coupling basin where the effluents are subject to further clarification.

A conduit arranged at the bottom extends from the central basin, which conduit sends back a part of the effluents to the upper portion of the biological reactor by means of pump P2, whereas another part of the effluents is sent to the cross-flow filtration unit with the aid of pump P3. At the outlet of the filtration unit, the retentate fraction is sent back to the central coupling basin and the permeate fraction is discharged in order for the waters to be reused or undergo a finishing or final treatment.

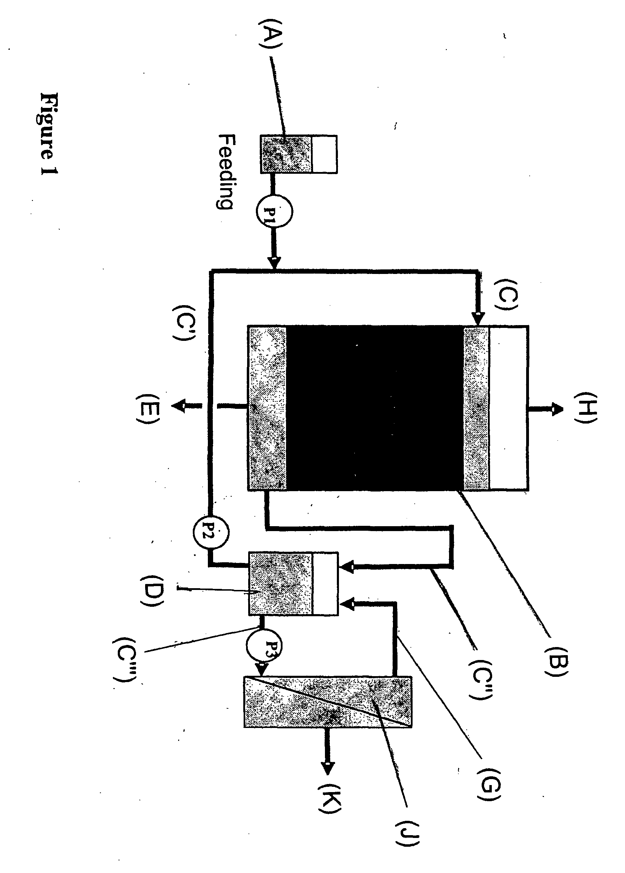

The device in accordance with the invention will be more clearly defined upon reference to Figure 1 appended herein, which basically shows a feed reservoir (A) coupled to the biological reactor (B) by means of a pump (P1) connected to a conduit (C). running to the top of the biological reactor (B) and by means of a conduit (C') extending from the central coupling basin (D) powered by a pump (P2).

The biological reactor (B) includes a sludge draining device (E) located at the bottom thereof and a purified water discharge conduit (C") which brings the effluents to the central coupling basin (D). The latter includes in its lower portion a discharge conduit (C"') which brings the efluents to the filtration unit (F) by means of a pump (P3). The cross-flow filtration unit (F) includes on one hand a discharge conduit for the permeate fraction (K) composed of fully purified waters and on the other a discharge conduit located in the upper portion thereof for discharging the retentate fraction (J) which is recycled into the central coupling basin (D).

The biological reactor (B) is provided on top thereof with a discharge valve for releasing the biogas to the outside environment (H).

This device is particularly adapted to the treatment of effluents originating from the food and agriculture industries such as for example those effluents of the dairy industry, the effluents of wine-making plants, the effluents of brewing plants, and the effluents of the beverages industries such as for example fruit juice production. This device is generally suited to the purification of any waste water having a high organic load, whether soluble or of a non particulate nature.

Hence, it is possible to recycle permeate fractions free from organic pollutants some of which are harmful to health.

## Claims

1. A method for biologically treating effluents having a high concentration of organic substances, comprising the use of a fixed cell anaerobic biological reactor and a filtration device, **characterized in that** it combines an anaerobic biological reactor fed with effluents from the top thereof, and being operated in a downflow configuration, with an outer cross-flow filtration device provided with low cut-off membrane filters.

2. A method in accordance with claim 1, wherein the biological reactor and the cross-flow filtration unit are interconnected by means of a coupling device, whereby the hydraulics of both systems are made totally independent.

3. A method in accordance with claim 1, wherein the fixed bed biological reactor contains a bulk or organized packing material made from an inert stuff.

4. A method in accordance with claim 1 and claim 3 wherein the inert material is comprised of carriers made of polyethylene or high density polyethylene.

5. A method in accordance with claim 3, wherein the packing material is arranged over a support such as a wire-screen or a grating, positioned in the lower portion of the reactor.

6. A method in accordance with claim 1, wherein feeding of the biological reactor occurs on the upperside of the tank by means of a flow pump.

7. A method in accordance with claim 1, wherein distribution of the effluent at the top of the tank is evenly conducted by means of a dispersion device.

8. A method in accordance with claim 1, wherein shaking of the biological medium and even distribution of the temperature throughout the biological reactor are performed by an outer flow loop.

9. A method in accordance with claim 1, wherein the coupling device between the biological reactor and the filtration unit is built in an independent fashion by means of two distinct flow pumps and an outer coupling basin.

10. An anaerobic biological purification device embodying the method of claim 1, which comprises a feeding device for wastewater, an admission device for said waste waters into the upper portion of a biological reactor including in the lower portion thereof a fixed bed containing a bulk packing material of an inert stuff arranged over a support and provided with a dispersion device at the top of the reactor tank and a sludge draining device in the lower portion of the biological reactor, a waste water discharge device, a central coupling basin which receives the purified waters and two discharge conduits, one of which sends back a portion of the effluents to the biological reactor by means of an electric flow pump P2, while the other sends the effluents to the cross-flow filtration unit by means of another flow pump P3, with the cross-flow filtration unit performing the separation of a retentate fraction which is recycled into the central coupling basin and of a permeate fraction which may be directly used or discharged into the natural environment.

11. A device in accordance with claim 10, which further includes a monitoring device which enables continuous recording of the different parameters of the fermentation reaction and the purification process.

12. The use of the method in accordance with anyone of claims 1 to 9 for treating effluents derived from the food and agriculture industry.

13. The use of the method in accordance with claim 12, for treating effluents derived from the dairy industry.
